# EUROPÄISCHE PATENTSCHRIFT

(11) **EP 0 900 540 B1**
(45) Veröffentlichungstag und Bekanntmachung des Hinweises auf die Patenterteilung: **13.03.2002**
(21) Anmeldenummer: 98810646.4
(22) Anmeldetag: 08.07.1998
(51) Int. Cl.: A47J 27/022, A47J 36/04

(54) **Kochgefäss zur Verwendung auf einer Kochstelle**
Cooking device to be used on a cooking surface
Récipient de cuisson à utiliser sur une surface de cuisson

(30) Priorität: 04.09.1997 CH 207597
(43) Veröffentlichungstag der Anmeldung: 10.03.1999
(73) Patentinhaber: Kuhn Rikon AG, 8486 Rikon im Tösstal (CH)
(72) Erfinder: Hüppi, Marcel W., 9524 Zuzwil (CH); Berroth, Karl, 8605 Gutenswil (CH)
(74) Vertreter: Groner, Manfred

(56) Entgegenhaltungen:
- WO-A-96/21384
- CH-A- 688 301
- GB-A- 561 766
- PATENT ABSTRACTS OF JAPAN vol. 97, no. 9, 30. September 1997 & JP 09 135770 A (YAMAMOTO MASAHIKO), 27. Mai 1997

## Beschreibung

Die Erfindung betrifft ein Verfahren nach dem Oberbegriff des Anspruchs 1.

Kochgefässe der genannten Art sind seit langem und in zahlreichen Ausführungen bekannt. Beispielsweise zeigt die CH-A-688 301 des Anmelders ein solches Kochgefäss, das als Dampfkochtopf ausgebildet ist. Bekannt ist auch, dass bei solchen Gefässen mit einem mehrschichtigen Boden die Verwendbarkeit auf unterschiedlichen Kochstellen verbessert und der Energieverbrauch verringert werden kann. Solche Böden bestehen beispielsweise aus miteinander verbundenen, insbesondere verlöteten Metallplatten. Kochgefässe mit solchen Böden können auch induktionstauglich sein. Obwohl sich solche Kochgefässe in der Praxis bewährt haben, besteht bei derartigen Kochgeschirren wegen des Aufbaus solcher Böden aus unterschiedlichen Materialien das Problem der Bodenstabilität infolge von Bimetalleffekten beim Erhitzen. Im Hinblick auf den Energieverbrauch und die Verwendung auf unterschiedlichen Kochstellen besteht das Bedürfnis, die Bodenstabilität durch Optimierung der Werkstoffeigenschaften, insbesondere des thermischen Ausdehnungskoeffizienten, der Wärmeleitfähigkeit, des Elastizitätsmoduls und der Bruchzähigkeit zu verbessern.

Ein Verfahren der genannten Art ist aus der GB-A-561 766 bekannt geworden. Bei diesem wird zur Bildung einer Schicht des Bodens auf ein Gefäss ein Kompositwerkstoff aufgegossen. Dieser Kompositwerkstoff besteht aus nichtmetallischen Partikeln wie Schlakke oder Asche und einer metallischen Matrix aus Aluminium und Zink. Die WO 96/21384 offenbart ein Kochgefäss, bei dem der Boden aus Ingenieurkeramik, wie beispielsweise Siliziumnitrid, Siliziumkarbid oder Aluminiumnitrid hergestellt ist. Zum Verbinden der Ingenieurkeramik mit der Gefässwand ist ein Haltering erforderlich.

Der Erfindung liegt die Aufgabe zugrunde, ein weiteres Verfahren zur Herstellung von Kochgefässen zu schaffen.

Beim erfindungsgemässen Kochgefäss lassen sich die physikalischen Eigenschaften des Bodens durch Änderungen des metallischen Werkstoffes und der Keramikanteile auf die gewünschten Werte gezielt einstellen. Es lassen sich so sehr niedrige Ausdehnungskoeffizienten und eine hohe Wärmeleitfähigkeit bei gleichzeitig hoher Bruchzähigkeit erreichen. Ein hohes E-Modul kann durch einen entsprechend hohen Anteil an Keramik eingestellt werden. Vorteilhaft ist zudem, dass das spezifische Gewicht des Verbundes aus dem metallischen Werkstoff und den eingelagerten Keramikanteilen kleiner sein kann als das spezifische Gewicht des metallischen Werkstoffes selbst. Eine besonders hohe Leitfähigkeit kann durch einen Verbund von Keramik mit Kupfer erreicht werden.

Um die Induktionstauglichkeit herzustellen, kann der genannte metallische Werkstoff Eisen enthalten. Alternativ kann auch auf das genannte Substrat eine Platte aus ferritischem Werkstoff aufgelötet werden.

Die Erfindung ermöglicht die Herstellung eines Kochgefässes im Druckguss, wobei das genannte Substrat aus dem metallischen Werkstoff und den eingelagerten Keramikteilen in den Druckguss integriert ist. Der Boden des Kochgefässes besteht dann wenigstens bereichsweise aus metallimprägnierter Keramik. Griffe und dergleichen können in einem Arbeitsgang als Angussteile hergestellt werden. Als Werkstoff eignet sich hier insbesondere Aluminium oder eine Aluminiumlegierung. Die Gefässwandung sowie die Angussteile bestehen aus diesem metallischen Werkstoff. Im Gefässboden ist dann dieser metallische Werkstoff mit Keramikanteilen angereichert.

Ein weiterer Vorteil der Erfindung wird auch darin gesehen, dass der Boden unterseitig in einfacher Weise und kostengünstig miteiner Struktur, beispielsweise zur Bildung von Entlüftungskanälen, herstellbar ist. Solche Entlüftungskanäle können erforderlich sein, um das sogenannte "Ankleben" des Topfes auf einer besonders planen Kochstelle zu verhindern.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:

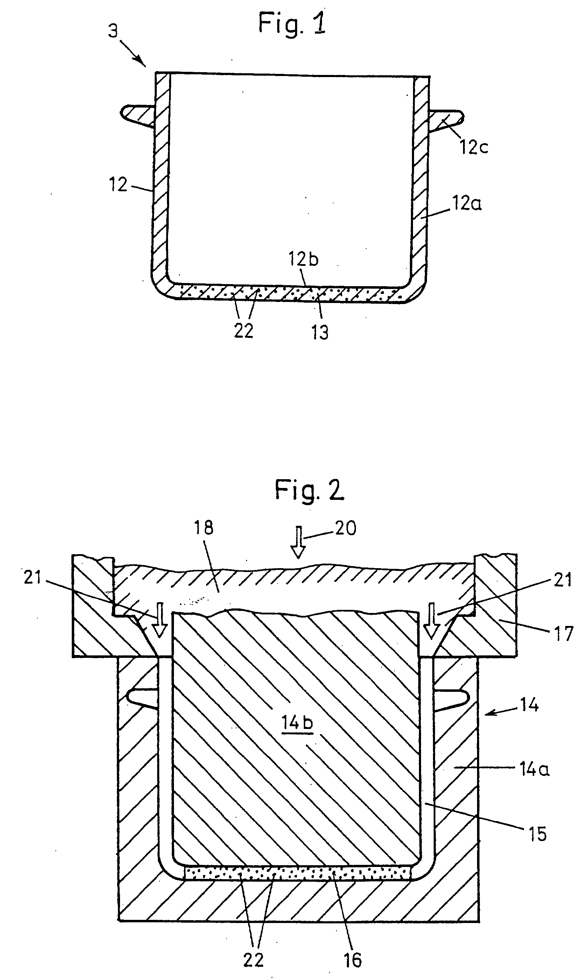

- Figur 1: ein schematischer Schnitt durch ein nach dem erfindungsgemässen Verfahren hergestelltes Kochgefäss, und
- Figuren 2 und 3: schematisch das Herstellen des Kochgefässes gemäss Figur 1.

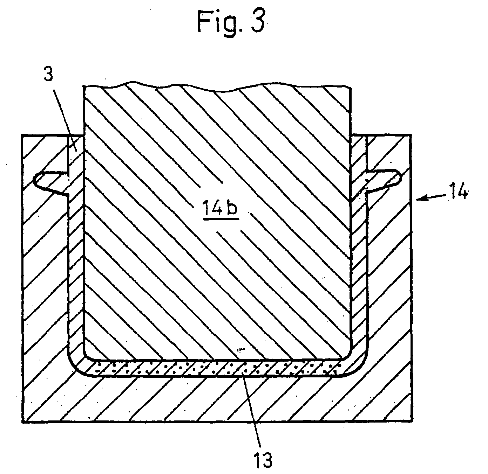

Die Figur 3 zeigt ein Kochgefäss 3, das im Druckguss, beispielsweise Aluminiumdruckguss, hergestellt ist. Hierbei sind Griffe 12c oder dergleichen an die Wandung 12a des Topfes 12 angeformt. In den Boden 12b ist ein Bodenbereich 13 integriert, der aus dem oben genannten Substrat, also aus einem metallischen Werkstoff mit eingelagerten Keramikteilen 22, hergestellt ist. Die Keramikteile 22 sind schematisch durch den punktierten Bereich angedeutet. Die Herstellung des Kochgefässes 3 kann beispielsweise gemäss den Figuren 4 und 5 erfolgen. Die hier schematisch dargestellte Gussvorrichtung 14 besteht aus einem äusseren Werkzeugteil 14a und einem inneren Werkzeugteil 14b sowie einem Reservoir 17. Die Figur 4 zeigt den eingelegten Vorformling 16 aus poröser Keramik. Das Reservoir 17 enthält den metallischen Werkstoff 18, also beispielsweise Aluminium oder eine Aluminiumlegierung. Zwischen den beiden Werkzeugteilen 14a und 14b befindet sich ein Zwischenraum 15 korrespondierend zu dem herzustellenden Kochgefäss 3. Um den metallischen Werkstoff 18 in den Zwischenraum 15 einzubringen, wird dieser evakuiert und in Richtung des Pfeiles 20 auf den Werkstoff 18 ein Druck ausgeübt. Dieser Werkstoff 18 gelangt nun in Richtung der Pfeile 21 in den Zwischenraum 15 und gleichzeitig auch in die Poren des Vorformlings 16. Der Vorformling 16 wird somit vom metallischen Werkstoff 18 imprägniert. Die Figur 5 zeigt das fertige und zum Ausstossen bereite Kochgefäss 3. Die für das Kochgefäss 3 wesentlichen physikalischen Eigenschaften können, wie bereits erwähnt, durch die Wahl des metallischen Werkstoffs, der Keramik und die Anteile dieser Komponenten in weiten Bereichen eingestellt werden. Durch das genannte Verfahren ist der Boden sicher und ohne schwer zu reinigende Stufen oder Rillen im Gefäss integriert. Zusätzliche Mittel zur Befestigung des Bodens 13 erübrigen sich deshalb.

## Patentansprüche

1. Verfahren zum Herstellen eines Kochgefässes zur Verwendung auf einer Kochstelle, mit einem Boden (13) und einer damit verbundenen Gefässwandung (12), wobei der Boden (13) mit einem Bereich aus einem metallischen Werkstoff mit eingelagerten Keramikteilen (22) hergestellt ist und der Bereich als planparallele Platte ausgebildet ist, **dadurch gekennzeichnet, dass** die Gefässwandung (12) im Gussverfahren hergestellt und der genannte Bereich in den Guss integriert wird.

2. Verfahren nach Anspruch 1, **dadurch gekennzeichnet, dass** der genannte Bereich aus metallimprägnierter Keramik oder keramikverstärktem Metall hergestellt ist.

3. Verfahren nach einem der Ansprüche 1 oder 2, **dadurch gekennzeichnet, dass** die Gefässwandung (4a, 12a) im Druckguss, insbesondere Aluminiumdruckguss, hergestellt ist.

4. Verfahren nach einem der Ansprüche 1 bis 3, **dadurch gekennzeichnet, dass** der metallische Werkstoff Aluminium, eine Aluminiumlegierung, Kupfer, eine Kupferlegierung, Eisen oder eine Eisenlegierung ist.

5. Verfahren nach einem der Ansprüche 1 bis 4, **dadurch gekennzeichnet, dass** der genannte Bereich einen ferromagnetischen Werkstoff aufweist.

6. Verfahren nach einem der Ansprüche 1 bis 5, **dadurch gekennzeichnet, dass** auf den genannten Bereich eine Platte (7) aus ferritischem oder austenitischem Werkstoff aufgelötet oder aufgeschlagen ist.

7. Verfahren nach einem der Ansprüche 1 bis 6, **dadurch gekennzeichnet, dass** der Anteil an keramischem Werkstoff im Bereich von 20 bis 80 Vol.-%, vorzugsweise 20 bis 50 Vol.-%, insbesondere 25 bis 35 Vol.-% beträgt.

8. Verfahren nach einem der Ansprüche 1 bis 7, **dadurch gekennzeichnet, dass** das Kochgefäss ein Schnell- oder Dampfdruckkochtopf ist.

9. Verfahren nach einem der Ansprüche 1 bis 8, **dadurch gekennzeichnet, dass** der Boden (8) unterseitig strukturiert ist.

## Claims

1. Process for producing a cooking vessel for use on a cooker top, having a base (13) and a vessel wall (12) which is connected thereto, the base (13) being produced with a region made from a metallic material with incorporated ceramic parts (22), and the region being designed as a plane-parallel plate, **characterized in that** the vessel wall (12) is produced by casting, and the said region is integrated in the casting.

2. Process according to Claim 1, **characterized in that** the said region is produced from metal-impregnated ceramic or ceramic-reinforced metal.

3. Process according to one of Claims 1 or 2, **characterized in that** the vessel wall (4a, 12a) is produced by die casting, in particular aluminium die casting.

4. Process according to one of Claims 1 to 3, **characterized in that** the metallic material is aluminium, an aluminium alloy, copper, a copper alloy, iron or an iron alloy.

5. Process according to one of Claims 1 to 4, **characterized in that** the said region has a ferromagnetic material.

6. Process according to one of Claims 1 to 5, **characterized in that** a plate (7) made from ferritic or austenitic material is soldered or forced onto the said region.

7. Process according to one of Claims 1 to 6, **characterized in that** the proportion of ceramic material in the region is from 20 to 80% by volume, preferably 20 to 50% by volume, in particular 25 to 35% by volume.

8. Process according to one of Claims 1 to 7, **characterized in that** the cooking vessel is a pressure or steam cooker.

9. Process according to one of Claims 1 to 8, **characterized in that** the base (8) is structured on its underside.

## Revendications

1. Procédé pour la fabrication d'un récipient destiné à être utilisé sur un emplacement de cuisson, présentant un fond (13) auquel est reliée une paroi de récipient (12), le fond (13) étant réalisé avec une zone en un matériau métallique dans lequel sont incorporées des pièces (22) en céramique, la zone étant configurée en forme de plaque à plans parallèles, **caractérisé en ce que** la paroi (12) du récipient est réalisée par un procédé de coulée et **en ce que** ladite région est intégrée dans la coulée.

2. Procédé selon la revendication 1, **caractérisé en ce que** ladite zone est réalisée en céramique imprégnée de métal ou en métal renforcé par céramique.

3. Procédé selon l'une des revendications 1 et 2, **caractérisé en ce que** la paroi (4a, 12a) du récipient est réalisée par coulée sous pression, en particulier par coulée d'aluminium sous pression.

4. Procédé selon l'une des revendications 1 à 3, **caractérisé en ce que** le matériau métallique est l'aluminium, un alliage d'aluminium, le cuivre, un alliage de cuivre, le fer ou un alliage de fer.

5. Procédé selon l'une des revendications 1 à 4, **caractérisé en ce que** ladite zone présente un matériau ferromagnétique.

6. Procédé selon l'une des revendications 1 à 5, **caractérisé en ce qu'**une plaque (7) en matériau ferritique ou austénitique est soudée ou forgée sur ladite zone.

7. Procédé selon l'une des revendications 1 à 6, **caractérisé en ce que** la teneur en matériau céramique est comprise dans la plage de 20 à 80 % en volume, de préférence de 20 à 50 % en volume, et en particulier de 25 à 35 % en volume.

8. Procédé selon l'une des revendications 1 à 7, **caractérisé en ce que** le récipient de cuisson est une casserole de cuisson rapide ou de cuisson à vapeur sous pression.

9. Procédé selon l'une des revendications 1 à 8, **caractérisé en ce que** le fond (8) est structuré sur son côté inférieur.
